# EUROPÄISCHE PATENTSCHRIFT

(11) **EP 0 688 824 B1**
(45) Veröffentlichungstag und Bekanntmachung des Hinweises auf die Patenterteilung: **24.11.2004**
(21) Anmeldenummer: 95109010.9
(22) Anmeldetag: 12.06.1995
(51) Int. Cl.: C08L 65/00, C08L 71/12, B01D 71/68, C08L 81/06, C08L 71/00

(54) **Homogene Polmerlegierungen auf der Basis von sulfonierten, aromatischen Polyetherketonen**
Homogeneous polymer blends on the basis of sulphonated, aromatic polyetherketones
Allignes polymériques homogènes à la base de polyéther cétones aromatiques sulfonés

(30) Priorität: 24.06.1994 DE 4422158
(43) Veröffentlichungstag der Anmeldung: 27.12.1995
(73) Patentinhaber: Pemeas GmbH, 65926 Frankfurt am Main (DE)
(72) Erfinder: Helmer-Metzmann, Freddy, Dr., D-55128 Mainz (DE); Schneller, Arnold, Dr., D-55126 Mainz (DE)
(74) Vertreter: Luderschmidt, Schüler & Partner GbR

(56) Entgegenhaltungen:
- EP-A- 0 568 045
- GB-A- 2 216 134
- DESALINATION, Bd. 89, Nr. 3, 1.Januar 1993 Seiten 275-287, TAM C M ET AL 'POLYSULFONE MEMBRANES II PERFORMANCE COMPARISON OF POLYSULFONE-POLY-(N-VINYL-PYRROLIDONE) MEMBRANES'
- JOURNAL OF APPLIED POLYMER SCIENCE, Bd. 46, Nr. 2, 15.September 1992 Seiten 303-310, MALIK T M 'THERMAL AND MECHANICAL CHARACTERIZATION OF PARTIALLY MISCIBLE BLENDS OF POLY (ETHER ETHER KETONE) AND POLYETHERSULFONE'

## Beschreibung

Die Erfindung betrifft Polymerlegierungen, die in homogener Mischung mindestens ein sulfoniertes, aromatisches Polyetherketon, mindestens ein aromatisches Polysulfon sowie ein hydrophiles Polymer enthalten. Die Erfindung betrifft ferner die Herstellung und Verwendung der Polymeren.

Das Prinzip der Modifizierung von Werkstoffeigenschaften von Polymeren durch Herstellung von homogenen Polymerlegierungen ist bekannt. Auf diese Weise können technologisch wichtige Eigenschaften von Polymerwerkstoffen verbessert oder gezielt eingestellt werden, die oft auf eine andere Art und Weise, wie z.B. durch Copolymerisation, nicht oder nur schwierig realisierbar sind.

Eine Grundvoraussetzung für die Möglichkeit der Herstellung einer homogenen Polymerlegierung ist die vollständige Mischbarkeit der Legierungskomponenten. Die vollständige Mischbarkeit ist jedoch eine ungewöhnliche Eigenschaft von Polymer-Systemen, die normalerweise dazu tendieren, Mehrphasensysteme auszubilden (Polymer, Vol. 24, S. 60 (1983)).

Selbst moderne thermodynamische Theorien sind bis heute nur begrenzt erfolgreich, was die Vorhersage der Mischbarkeit betrifft. Es wurde daher bezweifelt, daß irgendeine praktische Theorie entwickelt werden kann, welche die realen Komplexitäten berücksichtigt, die die Natur den Polymer-Polymer-Wechselwirkungen verleiht (Macromolecules, Vol. 16, S. 753 (1983)).

Man ist deshalb bis heute weit davon entfernt, die Eigenschaften einer Legierung aus den Eigenschaften ihrer Einzelkomponenten gesichert vorhersagen zu können, so daß das Legieren von Polymeren noch weitgehend empirisch ist (Olabisi, Robeson, Shaw: Polymer-Polymer-Miscibility, Academic Press, New York 1979, S. 321-327). Insbesondere ist die homogene Mischbarkeit von Polymerlegierungen, die stark wechselwirkende Polymere enthalten, trotz einer sehr großen Zahl von experimentellen und theoretischen Arbeiten auf diesem Gebiet, nicht vorherzusagen (Journal of Polymer Science, Polymer Physics Edition, Vol. 21, S. 11 (1983)).

In der Technik besteht jedoch ein sehr großes Interesse an homogen gemischten Polymerlegierungen, da deren Eigenschaften durch Variation der Legierungskomponenten und deren Mischungsverhältnissen bestimmten Anforderungen gezielt angepaßt werden können. Insbesondere wird gerade auf dem Gebiet der Ionenaustauschermaterialien, die als Membrane in modernen elektrochemischen Zellen - z.B. Elektrolyse- und Brennstoffzellen eingesetzt werden, die Einstellung der mechanischen Eigenschaften auf das jeweilige Anwendungsfeld gefordert. Dabei muß berücksichtigt werden, daß in diesen elektrochemischen Zellen der Einsatz eines freitragenden Films erforderlich ist, der im Betrieb der elektrochemischen Einheit über mehrere tausend Stunden mechanisch stabil bleiben muß. Außerdem wird von den Materialien eine ausreichende Basen- bzw. Säurestabilität bei gleichzeitiger optimaler Wasseraufnahmefähigkeit ohne starke Quellung, und dadurch Verlust der mechanischen Eigenschaften, gefordert. Als Zielgrößen werden die Optimierung der Leitfähigkeit und die Steigerung der Energiedichte der Ionenaustauscherkapazität angestrebt.

Die bisher auf diesem Gebiet eingesetzten lonenaustauschermaterialien, z.B. ®NAFION (Du PONT) limitieren durch ihre niedrige.Wärmeformbeständigkeit die Betriebstemperaturen von Membranelektrolyse- bzw. Membranbrennstoffzellen auf ca. 80°C - 100°C.

Aus GB 2 216 134 sind bereits Membranen für die Ultra- oder Mikrofiltration bekannt, die aus Polymerlegierungen von sulfonierten Polyetheretherketonen und Polyethersulfonen bestehen; jedoch besitzen diese Membranen nur geringe chemische Beständigkeit in Säure und Basen. Außerdem ist die Wasseraufnahmefähigkeit dieser Systeme unbefriedigend.

Der Erfindung lag deshalb die Aufgabe zugrunde, homogene Polymerlegierungen auf der Basis von sulfonierten Polyetherketonen bereitzustellen, deren Wasseraufnahmefähigkeit und deren mechanische Eigenschaften durch Variation der Mischungskomponenten und/oder der Mischungsverhältnisse gezielt eingestellt werden können. Zudem sollten die neuen Systeme zu Filmen verarbeitbar sein, die chemisch sowie thermisch beständig sind. Diese Ionenaustauscherfolien sollten gegenüber den bekannten Systemen höhere Wärmeformbeständigkeiten aufweisen, um z.B. in Membranelektrolyse- bzw. Membranbrennstoffzellen Betriebstemperaturen von mindestens 100°C zu ermöglichen. Außerdem sollte das Ionenaustauscheräquivalent dieser Systeme gezielt einstellbar sein.

Es wurde nun eine homogene Polymerlegierung gefunden, die mindestens ein sulfoniertes, aromatisches Polyetherketon und mindestens ein Polysulfon enthält und dadurch gekennzeichnet ist, daß das Polysulfon ein aromatisches Polysulfon ist, das Gewichtsverhältnis sulfoniertes Polyetherketon/Polysulfon 1:99 bis 99:1 beträgt und die Legierung 5 bis 30 Gew.-% mindestens eines hydrophilen Polymers enthält, das ausgewählt wird aus der Gruppe von Polyvinylpyrrolidon, Polyglykoldialkylether, Polyglykoldialkylester und Poly-[1-(2-oxo-1-pyrrolidinyl)ethylen-co-1-(acetyloxy)ethylen].

Unter aromatischen Polysulfonen werden dabei insbesondere Polyethersulfone verstanden, d.h. Polymere, die formal aus einer aromatischen Dihydroxykomponente und einer aromatischen Dihalogenkomponente aufgebaut sind, wobei in mindestens einem dieser Bausteine die aromatischen Gruppen über eine Sulfoneinheit miteinander verknüpft sind. Solche Produkte sind kommerziell erhältlich oder können nach den üblichen Polykondensationsverfahren hergestellt werden, wie z.B. in "The Organic Chemistry of Sulfur", Wiley, New York, 1962, p. 29; "Aromatic Nleophilic Substitution", Elsevier, New York, 1968; R.N. Johnson, A.G. Farnham, R.A. Clendinning, W.F. Hale and C.N. Merriam: J. Polym. Sci., Polym. Chem. Ed., 1967, 5, 2375 beschrieben wird.

Sulfonierte Polyetherketone sind bereits bekannt. Sie lassen sich durch konventionelle Sulfonierungsverfahren herstellen (z.B. nach EP-A-008895, EP-A-041780), sind aber auch durch ein neues Verfahren zugänglich (europäische Patentanmeldung 0 575 807). Sie zeichnen sich durch eine hohe Temperaturbeständigkeit, eine ausgezeichnete Hydrophilie und durch eine gute Löslichkeit in organischen Lösungsmitteln, wie N-Methylpyrrolidon oder N,N-Dimethylformamid, aus.

Vorzugsweise sind in der erfindungsgemäßen Polymerlegierung das sulfonierte, aromatische Polyetherketon und das aromatische Polysulfon in einem Gewichtsverhältnis von 1:9 bis 9:1 vorhanden.

Soweit die Polymerlegierung noch Poly-N-vinyl-2-pyrrolidon und/oder ein Copolymerisat aus N-Vinyl-2-pyrrolidon und Vinylacetat enthält, ist es vorteilhaft, wenn der Anteil an sulfonierten aromatischen Polyetherketonen 60 bis 80 Gew.-% und der Anteil an aromatischen Polysulfonen 10 bis 20 Gew.-% beträgt.

Es ist vorteilhaft, wenn die sulfonierten, aromatischen Polyetherketone aus Wiederholeinheiten der allgemeinen Formel I, 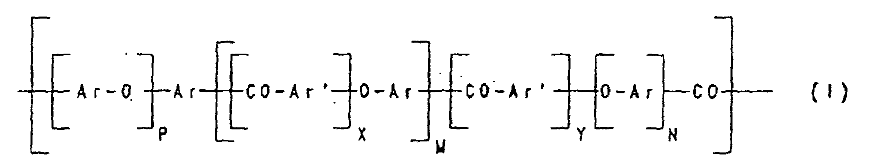 aufgebaut sind, wobei
- Ar: einen Phenylenring mit para- und/oder meta-Bindungen,
- Ar'-: einen Phenylen-, Naphthylen-, Biphenylen-, Anthrylen- oder eine andere zweiwertige aromatische Einheit,
- X, M und N: unabhängig voneinander Null oder 1,
- Y: Null, 1, 2 oder 3,
- p: 1, 2, 3 oder 4,
bedeuten, und wobei in der allgemeinen Formel I 20 bis 100 % der O-Phenylen-O-Einheiten mit einer SO₃H-Gruppe substituiert sind. Vorzugsweise werden in der allgemeinen Formel I die Indizes p, X und M so aufeinander abgestimmt, daß p = 2 - (1 - X) · M gilt.

Bevorzugt eingesetzt werden sulfonierte Polyetherketone der allgemeinen Formel II, 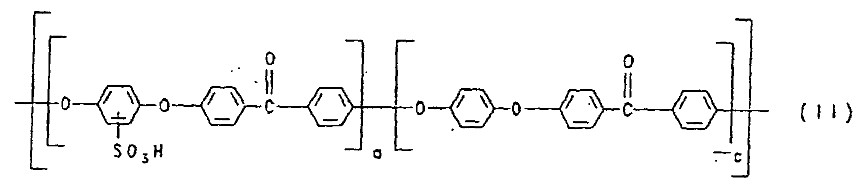 wobei a eine Zahl von 0,2 bis 1, c eine Zahl von 0 bis 0,8 bedeutet und die Summe a + c = 1 beträgt, der allgemeinen Formel III 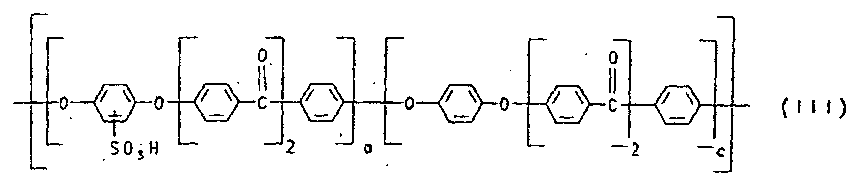 wobei a eine Zahl von 0,2 bis 1, c eine Zahl von 0 bis 0,8 bedeutet und die Summe a + c = 1 beträgt, und der allgemeinen Formel IV 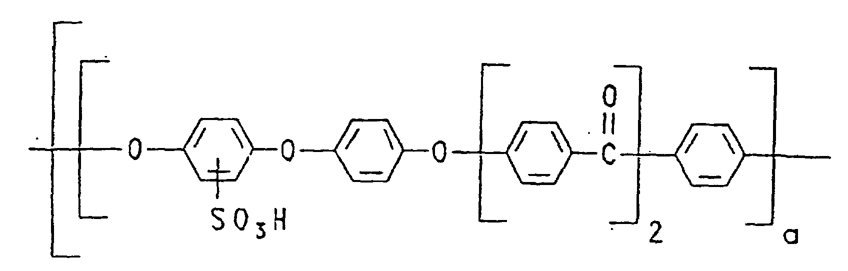 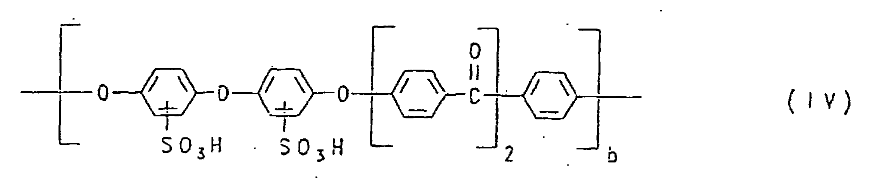 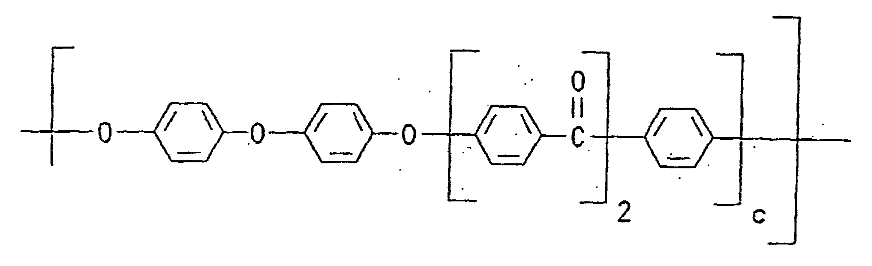 wobei a eine Zahl von 0 bis 1, b eine Zahl von 0 bis 1,
c eine Zahl von 0 bis 0,5 bedeutet, und die Summe a + b + c = 1 beträgt.

Darüber hinaus können auch sulfonierte Polyetherketone eingesetzt werden, die aus mindestens zwei unterschiedlichen Wiederholeinheiten der allgemeinen Formeln II, III und IV zusammengesetzt sind.
Man kann sie herstellen durch Copolymerisation von Einheiten der allgemeinen Formel II, III, IV (jedoch frei von Sulfonsäuregruppen) und nachträglicher Sulfonierung des gewonnenen Copolymeren.

Die eingesetzten sulfonierten Polyetherketone besitzen vorzugsweise Molmassen, angegeben als Gewichtsmittel, im Bereich von 10 000 bis 150 000 g/mol, insbesondere im Bereich von 20 000 bis 100 000 g/mol.

Die Herstellung von sulfonierten Polyetherketonen kann nach einem üblichen Sulfonierungsverfahren erfolgen (z.B. EP-A0-008 895, EP-A0-041 780). Vorzugsweise wird nach dem in der europäischen Patentanmeldung 0 575 807 beschriebenen Verfahren sulfoniert.
Die erfindungsgemäßen Polymerlegierungen enthalten als aromatische Polysulfone vorzugsweise mindestens eines, das Struktureinheiten der allgemeinen Formel (V)

- X-Ar¹-(-Z-Ar²-)ₙ- (X- Ar³)m-SO₂-Ar¹- (V)

aufweist, wobei
- -Ar¹-: einen 1,4-Phenylenrest oder einen zweiwertigen Rest eines Heteroaromaten oder eines (C₁₀-C₁₄)-Aromaten, der gegebenenfalls Sulfonsäuregruppen oder Etherbrücken enthält und gegebenenfalls mit einem oder zwei verzweigten oder unverzweigten C₁-C₄-Alkyl- oder Alkoxyresten oder mit einem oder mehreren Halogenatomen, beispielsweise Chlor, Fluor oder Brom substituiert ist,
- -Ar²- und -Ar³-: gleiche oder verschiedene 1,2-Phenylen-, 1,3-Phenylen-, 1,4-Phenylen- oder 4,4'-Biphenylreste, die gegebenenfalls mit einem oder zwei verzweigten oder unverzweigten C1-C4-Alkyl- oder Alkoxyresten oder mit einem oder mehreren Halogenatomen, substituiert sind,
- - Z-: eine direkte Bindung oder einen der folgenden zweiwertigen Reste -0-,' - S-, -C(CH₃)₂-, -C(CF₃)₂-, -SO₂- oder - X-Ar³-X- bedeuten, wobei -Ar³- die vorstehend genannte Bedeutung hat,
- X: O, S, SO, CO oder SO₂ und
- n: eine ganze Zahl, insbesondere n = 0, 1 oder 2 und
- m: eine ganze Zahl, insbesondere m = 0, 1 oder 2, bedeuten.

Beispiele für aromatische Reste Ar¹sind der 4,4'-Biphenylrest und der Anthranylen-Rest. Beispiele für Heteroaromaten, von denen sich Ar¹ ableiten kann, sind Benzoxazol, Benzthiazol, Benzimidazol und 4-Phenyl-imidazol.

Bevorzugte Polysulfone sind Polyethersulfone und Copolyethersulfone, der allgemeinen Formel V, die aus den Struktureinheiten A, B, C und/oder D

(A) -O-Ar⁴-SO₂-Ar⁴

(B) -O-Ar⁴-O-Ar⁴-SO₂-Ar⁴

(C) -O-Ar⁴-C(CH₃)₂-Ar⁴-O-Ar⁴-SO₂-Ar⁴-,

(D) -O-Ar⁴-Ar⁴-O-Ar⁴-SO₂-Ar⁴-

bestehen, wobei die einzelnen Gruppen Ar⁴ unabhängig voneinander einen Phenylrest oder einen zweiwertigen Rest eines Heteroaromaten oder eines C₁₀-C₁₄-Aromaten bedeuten, der gegebenenfalls Sulfonsäuregruppen oder Etherbrücken enthält und gegebenenfalls mit einem oder zwei C₁-C₄-Alky)- oder C₁-C₄-Alkylresten oder ein oder mehreren Halogenatomen substituiert ist.

Die Molekulargewichte von einlegiertem Polyvinylpyrrolidon (PVP) und Copoly vinylpyrrolidon-polyvinylacetat = Poly-[1-(2-oxo-1-pyrrolidinyl)ethylen-co-1 -(acetoxy)ethylen] (abgekürzt: CoPVPAc), liegen, angegeben als Gewichtsmittel, meist bei 1000 bis 3 Millionen, vorzugsweise bei 20 000 bis 200 000, insbesondere bei 40 000 bis 100 000.

Die gegebenenfalls vorhandenen Polyethylenglykoldiester leiten sich von aliphatischen Carbonsäuren mit 1-3 C-Atomen oder von aromatischen Carbonsäuren mit 7 bis 11 C-Atomen ab. Die endständigen Ethergruppen der gegebenenfalls vorhandenen Polyethylenglykoldiether sind Alkylreste, vorzugweise mit 1-8 C-AtomEm. In beiden Fällen liegen die Molekulargewichte, angegeben als Gewichtsmittel, meist bei 100 bis 100 000, vorzugsweise bei 250 bis 80 000, insbesondere bei 500 bis 50 000. Besonders bevorzugt sind die Polyethylenglykoldimethylether bzw. -diacetate.

Die erfindungsgemäßen homogen gemischten Polymerlegierungen können aus einer gemeinsamen Lösung hergestellt werden, die mindestens ein sulfoniertes, aromatisches Polyetherketon, mindestens ein Polysulfon und mindestens eines der oben beschriebenen hydrophilen Polymeren, z.B. Polyvinylpyrrolidon und/oder CoPVPAc in einem aprotischen organischen Lösemittel enthält. Dazu kann beispielsweise das Polysulfon im entsprechenden Lösemittel gelöst werden, das sulfonierte Polyetherketon und das hydrophile Polymer in geeigneter Konzentration gelöst und anschließend eine Mischung der jeweiligen Polymerlösungen im berechneten Mengenverhältnis hergestellt werden. Als aprotisches hydrophiles Lösungmittel kann z.B. Dimethylformamid, Dimethylsulfoxid, N-Methylpyrrolidon oder N,N-Dimethylacetamid eingesetzt werden.

Alternativ dazu kann sulfoniertes Polyetherketon und das hydrophile Polymer in trockener Form direkt in die Polysulfonlösung nach Abschluß der Polykondensation gegeben werden.

Die erfindungsgemäßen Polymerlegierungen können aus den Lösungen durch Entfernen des Lösungsmittels, z. B. durch Verdampfen oder durch Fällung in einem geeigneten Fällungsmittel, z.B. Aceton oder Isopropylalkohol, isoliert und zu Zwischenprodukten (Granulat oder Pulver) weiterverarbeitet werden, die dann als Rohstoffe für die Herstellung von z.B. Formkörpern, Folien, Fasern, Membranen oder Beschichtungen sowie allgemein als Kationenaustauschermaterial alleine oder in Verbindung mit Anionenaustauschern in Bipolaren-Systemen eingesetzt werden können.

Vorteilhafte Eigenschaften der erfindungsgemäßen homogen gemischten Polymerlegierungen auf der Basis von sulfonierten Polyetherketonen und aromatischen Polysulfonen sind ihre z.B. gegenüber sulfonierten Polyetherketonen verbesserten mechanischen Eigenschaften, besonders vorteilhaft ist die verbesserte Reißspannung Tabelle 3). Außerdem ist die verbesserte Stabilität der Polymerlegierung gegenüber Säuren und Basen hervorzuheben. Die Hydrophilie der Legierungen wird durch Zumischen von Polyvinylpyrrolidon, CoPVPAc bzw. Polyethylenglykoldiether oder Polyethylenglykoldiester gezielt eingestellt (Tabelle 3), ohne daß die oben beschriebenen Eigenschaften verloren gehen. Ein weitere wichtige Eigenschaft der Polymerlegierungen ist ihre gegenüber den reinen sulfonierten Polyetherketonen höhere Glasübergangstemperatur. Dadurch können die Materialien bei höheren Betriebstemperaturen eingesetzt werden. Dies ist insbesondere für elektrochemische Anwendungen wichtig.

Die Erfindung wird durch die nachfolgenden Beispiele näher erläutert.

### Beispiele:

Die folgenden Polymere wurden hergestellt tbzw. als kommerzielle Produkte eingesetzt. Die Summe der Indizes x + y beträgt jeweils 1.

Sulfoniertes Polyetherketon I (PEK-I), mit einer inhärenten Viskosität von 0,7 dl/g, gemessen in Schwefelsäure bei 25°C, mit wiederkehrenden Einheiten der folgenden Formel 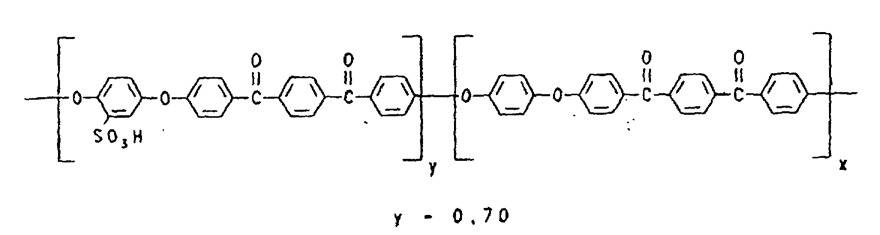 Sulfoniertes Polyetherketon II (PEK-II), mit einer inhärenten Viskosität von 0,22 dl/g, gemessen in Schwefelsäure bei 25°C, mit wiederkehrenden Einheiten der folgenden Formel 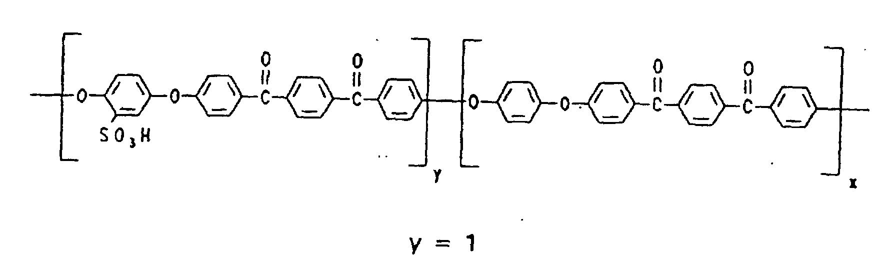 Sulfoniertes Polyetherketon III (PEK-III), mit einer inhärenten Viskosität von 0,5 dl/g, gemessen in Schwefelsäure bei 25 °C, mit wiederkehrenden Einheiten der folgenden Formel 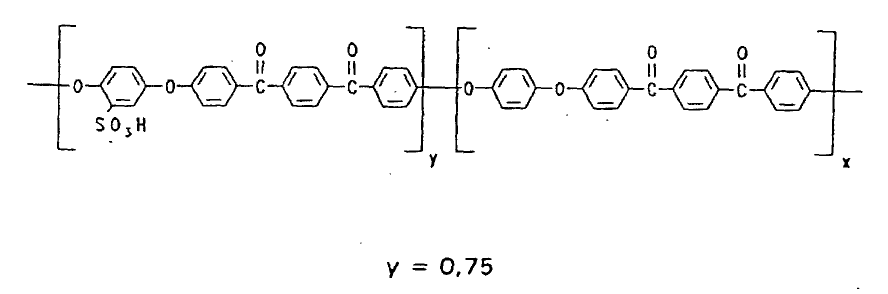 Sulfoniertes Polyetherketon IV (PEK-IV), mit einer inhärenten Viskosität von 0,57 dl/g, gemessen in Schwefelsäure bei 25 °C, mit wiederkehrenden Einheiten der folgenden Formel 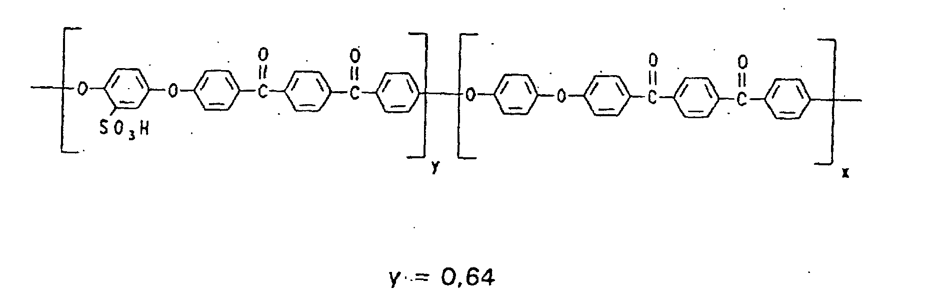 Sulfoniertes Polyetherketon V (PEK-V), mit einer inhärenten Viskosität von 0,6 dl/g, gemessen in Schwefelsäure bei 25 °C, mit wiederkehrenden Einheiten der folgenden Formel 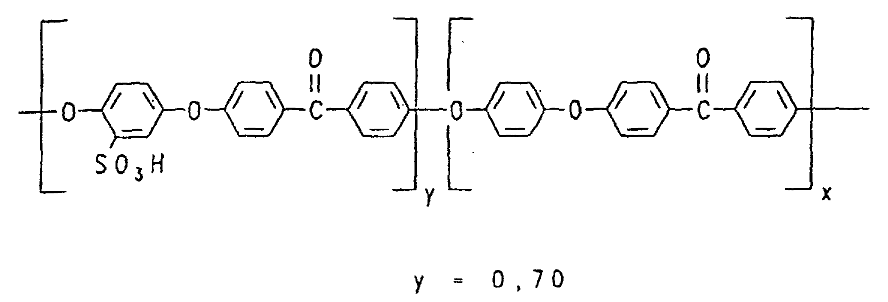 Sulfoniertes Polyetherketon VI (PEK-VI), mit einer inhärenten Viskosität von 0,65 dl/g gemessen in Schwefelsäure bei 25°C, bestehend aus wiederkehrenden Einheiten der folgenden Formel 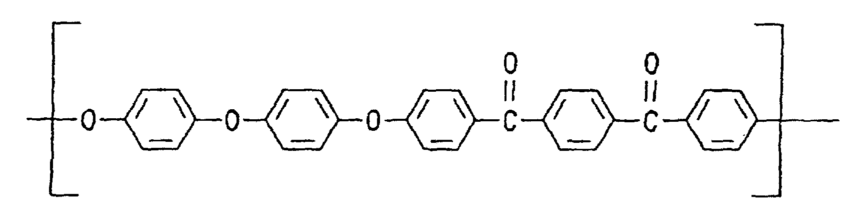 in der 1,38 O-Phenylen-O-Einheiten pro wiederkehrender Einheit eine SO₃H-Gruppe tragen.

Poly-N-vinylpyrolidon (PVP, ®Luviskol K30, BASF) und das Polymerisat aus N-Vinyl-2-Pyrollidon und Vinylacatat (CoPVPAc,® Kollidon VA 64, BASF) wurden eingesetzt mit Molekulargewichten von 40 000, angegeben als Massenmittel.

Als Polyarylsulfone wurden ®ULTRASON E 1000 (BASF,PES I, niedrigviskose Einstellung); ®ULTRASON S 2000 (BASF, PES II, mittelviskose Einstellung) und ® RADEL 85000 (Union Carbide, PES III) eingesetzt.

Polyglykoldimethylether (PG, HOECHST AG) wurden eingesetzt mit Molekulargewichten von 500 und 2000, angegeben als Massenmittel.

### Beispiele 1 bis 20:

### Allgemeine Vorschrift zur Herstellung der Legierungen

Die Zusammensetzungen der einzelnen Legierungen sind in Tabelle 1 und 2 zusammengestellt.

Die sulfonierten Polyetherketone, die aromatischen Polysulfone, die Polyvinylpyrrolidone und/oder die Polyglykole wurden in unterschiedlichen Gewichtsverhältnissen (vgl. Tabelle 1 u. 2) in N-Methylpyrolidon gelöst (10 %ige (g/g) Lösungen). Diese Lösungen wurden auf Glasplatten aufgerakelt. Anschließend wurde das Lösungsmittel entfernt (verminderter Druck bei 80°C für 24 Stunden). Die erhaltenen Folien wurden nach dem Trocknen mehrfach gewässert und erneut getrocknet (verminderter Druck bei 80°C für 24 Stunden). Sämtliche Folien waren transparent und duktil, d.h. sie konnten ohne zu brechen aufeinander gefaltet werden. Tabelle 3 zeigt, daß die Reißspannung der sulfonierten Polyetherketone durch Legieren mit aromatischen Polysulfonen verbessert werden kann. Die Hydrophilie (Wasseraufnahme) der Legierungen kann durch Zumischen von Polyvinylpyrrolidon bzw. Polyglykoldimethylether gezielt eingestellt werden (vgl. Tabelle 4). Außerdem zeigen die Blends eine deutlich verbesserte Säure- bzw. Basenstabilität im Vergleich zu den sulfonierten Polyetherketonen. Während die Folien aus sulfonierten Polyetherketonen bereits nach kurzer Lagerzeit in 30 %iger NaOH bzw. KOH spröde werden und beim Faltversuch brechen, bleiben die Blends aus sulfonierten Polyetherketonen und Polysulfon und/oder Polyvinylpyrrolidon und/oder Polyglykoldimethylether nach mehereren Tagen Lagerung in 30 %iger NaOH bzw. KOH mechanisch stabil. Die hohen Glastemperaturen der Blends gewährleisten einen Einsatz dieser Ionenaustauschermaterialien bei Temperaturen oberhalb von 140°C (vgl. Tabelle 1 und 2).

Die Beispiele 1-15 sowie 21 und 22 sind Vergleichsbeispiele. Die Beispiele 16-20 sind erfindungsgemäß.

**Tabelle 1:**

| Legierungen aus sulfonierten Polyetherketonen und Polysulfonen. | | | | |
|---|---|---|---|---|
| Beispiele | PEK | PES | T_{g}a. | IAK^{b}. |
| | [%] | [%] | [°C ] | [mmol/gl] |
| 1 | PEK I | PES | 150 | 1,7 |
| | [100] | [0] | | |
| 2 | PEK II | PES | 132 | 2,1 |
| | [100] | [0] | | |
| 3 | PEK III | PES | 153 | 1,6 |
| | [100] | [0] | | |
| 4 | PEK IV | PES | 165 | 1,4 |
| | [100] | [0] | | |
| 5 | PEK I | PES I | 184 | 1,3 |
| | [80] | [20] | | |
| 6 | PEK I | PES I | 198 | 0,96 |
| | [60] | [40] | | |
| 7 | PEK I | PES I | 222 | 0,64 |
| | [40] | [80] | | |
| 8 | PEK II | PES I | 185 | 1,26 |
| | [60] | [40] | | |
| 9 | PEK III | PES I | 180 | 1,31 |
| | [80] | [20] | | |
| 10 | PEK III | PES I | 189 | 0,98 |
| | [60] | [40] | | |
| 11 | PEK IV | PES I | 192 | 1,13 |
| | [80] | [20] | | |
| 12 | PEK I | PES II | 175 | 1,3 |
| | [80] | [20] | | |
| 13 | PEK III | PES II | 156 | 0,98 |
| | [60] | [40] | | |
| 14 | PEK I | PES III | 183 | 1,3 |
| | [80] | [20] | | |
| 15 | PEK III | PES III | 1.76 | 0,98 |
| | [60] | [40] | | |
| 21 | PEK V | PES II | 148 | 136 |
| | [80] | [20] | | |
| 22 | PEK V | PES II | 153 | 1,0 |
| | [60] | [40] | | |

| | | | | |
|---|---|---|---|---|
| Fortsetzung Tabelle 1 Legende: a: Tg = Glasumwandlungstemperatur gemessen mittels DSC (differential scanning calometry) mit einem Gerät der Firma Perkin Serie DSC 7 mit einer Aufheizrate von 20°C. Vor jeder Messung wurden die Proben 24h bei RT unter Wasser gelagert und anschließend vermessen. Der dabei erhaltene Wert dient als Vergleichsbasis für den praxisrelevanten Temperatureinsatzbereich und liegt unterhalb des Glaspunktes der Trockenprobe. | | | | |
| b: IAK = lonenaustauscherkapazität bestimmt durch Titration der Polymerelektrolytlösungen in DMSO mit 0,1 normaler NaOH bzw. berechnet aus dem Verhältnis der prozentualen Anteile von Schwefel zu Kohlenstoff, die aus der Elementaranalyse erhalten wurden. | | | | |

**Tabelle 2**

| Legierungen aus sulfonierten Polyetherketonen, Polysulfonen, Polyvinylpyrrolidon bzw. Polyglykoldimethylether | | | | | | |
|---|---|---|---|---|---|---|
| Beispiele | Konzentrationen der Mischungskomponenten [in Gew.-%] | | | | | |
| | PEK [%] | PES [%] | PVP [%] | PG [%] | T_{g} [°C] | IAK [mmol/g] |
| 16 | PEK I [80] | PES I [15] | PVP [5] | PG 500 [0] | 178 | 1,3 |
| 17 | PEK I [80] | PES I [10] | PVP [5] | PG 500 [5] | 165 | 1,3 |
| 18 | PEK I [80] | PES I [15] | PVP [0] | PG 500 [5] | 172 | 1,3 |
| 19 | PEK I [60] | PES I [20] | PVP [20] | PG 500 [0] | 153 | 0,96 |
| 20 | PEK I [60] | PES I [20] | PVP [0] | PG 500 [20] | 155 | 0,96 |
| vgl. Legende nach Tabelle 1 | | | | | | |

**Tabelle 3**

| Mechanische Daten der Folien aus den Polymerlegierungen gemäß den Beispielen | | | |
|---|---|---|---|
| Beispiele | E-Modul [GPa] | Reißdehnung [%] | Reißspannung [MPa] |
| 1 | 2,3 | 124 | 17 |
| 5 | 2,3 | 113 | 30 |
| 6 | 2,8 | 108 | 44 |
| 7 | 3,0 | 95 | 56 |
| 9 | 2,7 | 120 | 36 |
| 12 | 2,4 | 115 | 28 |
| 13 | 2,4 | 103 | 26 |
| 14 | 2,6 | 117 | 40 |
| 15 | 3,1 | 109 | 38 |
| 16 | 2,1 | 132 | 19 |
| 17 | 2,0 | 145 | 15 |
| 18 | 2,1 | 140 | 17 |
| 19 | 2,4 | 135 | 12 |
| 20 | 2,2 | 128 | 14 |
| 21 | 2,3 | 108 | 24 |
| 22 | 2,6 | 98 | 27 |

Zur Bestimmung der mechanischen Eigenschaften der hergestellten Materialien wurden die Proben 24 h bei RT in Wasser gelagert und anschließend nach dem oberflächlichen trockentupfen unter folgenden Bedingungen vermessen:
- Prüfgerät:: ®Instron 4302 (Fa. Instron, Offenbach, Deutschland)
- Probenkörper:: Folie gegossen aus Lösung
- Probengeometrie:: Länge: 50 mm; Breite: 10 mm; Dicke: 0,25 mm
- Prüfvorschrift:: 1 kN Meßdose
- Einspannlänge:: 35 mm

Messung des E-Moduls mit dynamischem Wegaufnehmer
- Meßlänge:: 10 mm
- Meßgeschwindigkeit:: 1 mm/min bis 0,35 mm Dehnung.

Messung über Traversenweg
- Meßlänge:: 35 mm
- Meßgeschwindigkeit:: 1 mm/min bis 0,35 mm, dann Umstellung auf 50 mm/min bis Bruch

**Tabelle 4**

| Wasseraufnahmetests nach ASTM D 4019-81 | | | | | |
|---|---|---|---|---|---|
| | Wassergehalt Gew.-% | | | | |
| Beispiel | min. | max. | ²MW | Anzahl der Messungen | Standardabweichung |
| 1 | 11,5 | 12,1 | 11,8 | 4 | ± 0,25 |
| 5 | 7,14 | 7,87 | 7,5 | 4 | ± 0,24 |
| 6 | 4,52 | 4,90 | 4,72 | 4 | ± 0,16 |
| 7 | 3,27 | 3,62 | 3,44 | 3 | ± 0,29 |
| 13 | 4,23 | 4,65 | 4,44 | 4 | ± 0,20 |
| 14 | 6,64 | 7,10 | 6,88 | 4 | ± 0,25 |
| 15 | 5,3 | 6,2 | 5,75 | 4 | ± 0,10 |
| 16 | 13,2 | 13,9 | 13,5 | 3 | ± 0,19 |
| 17 | 17,4 | 18,1 | 17,5 | 2 | ± 0,24 |
| 18 | 15,3 | 15,9 | 15,6 | 3 | ± 0,34 |
| 19 | 25,3 | 25,9 | 25,6 | 3 | ± 0,40 |

| | | | | | |
|---|---|---|---|---|---|
| ¹ Bezogen auf das Trockengewicht ²MW = Mittelwert | | | | | |

Zur Bestimmung der Wasseraufnahmefähigkeit der hergestellten Materialien nach ASTM D 4019-81 wurden die Proben bei 23°C bei einer relativen Luftfeuchtigkeit von 85% mindestens 210 Tage lang gelagert. Die Mengen an Wasser (Wassergehalt Gew-%), die bei einer erhöhten Temperatur gemäß der angegebenen Norm von den Proben abgegeben werden, wurden anschließend coulombmetrisch bestimmt.

## Patentansprüche

1. Homogene Polymerlegierung, enthaltend mindestens ein sulfoniertes, aromatisches Polyetherketon und mindestens ein Polysulfon, **dadurch gekennzeichnet, daß** das Polysulfon ein aromatisches Polysulfon ist, das Gewichtsverhältnis sulfoniertes Polyetherketon/Polysulfon 1:99 bis 99:1 beträgt und die Legierung 5 bis 30 Gew. mindestens eines hydrophilen Polymers enthält, das ausgewählt wird aus der Gruppe von Polyvinylpyrrolidon, Polyglykoldialkylether, Polyglykoldialkylester und Poly-[1-(2-oxo-1-pyrrolidinyl)ethylen-co-1-(acetyloxy)ethylen].

2. Homogene Polymerlegierung nach Anspruch 1, **dadurch gekennzeichnet, daß** sie mindestens ein sulfoniertes, aromatisches Polyetherketon mit der allgemeinen Formel I, 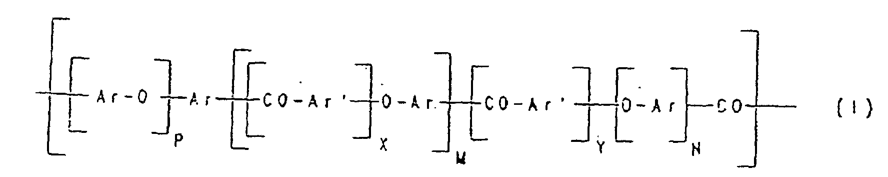 enthält, wobei
Ar einen Phenylenring mit para- und/oder meta-Bindungen,
Ar'- einen Phenylen-, Naphthylen-, Biphenylen-, Anthrylen- oder eine andere zweiwertige aromatische Einheit,
X, N und M unabhängig voneinander Null oder 1,
Y Null, 1, 2 oder 3,
p 1, 2, 3 oder 4,
bedeuten und wobei in der allgemeinen Formel I mindestens 20 % und maximal 100 % der O-Ar-O-Einheiten mit einer SO₃H-Gruppe substituiert sind.

3. Polymerlegierung nach Anspruch 1 oder 2, **dadurch gekennzeichnet, daß** sie mindestens ein sulfoniertes, aromatisches Polyetherketon der allgemeinen Formel II, 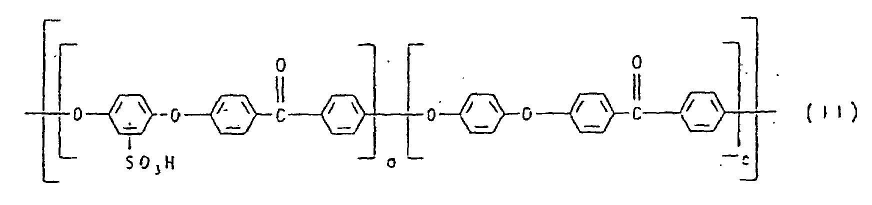 wobei a eine Zahl von 0,2 bis 1 und c eine Zahl von 0 bis 0,8 bedeutet und die Summe a + c = 1 beträgt, oder der allgemeinen Formel III 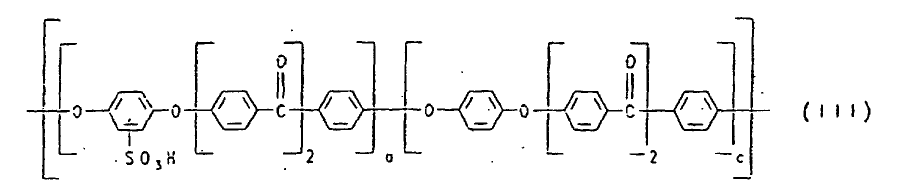 wobei a eine Zahl von 0,2 bis 1 und c eine Zahl von 0 bis 0,8 bedeutet und die Summe a + c = 1 beträgt, oder der allgemeinen Formel IV 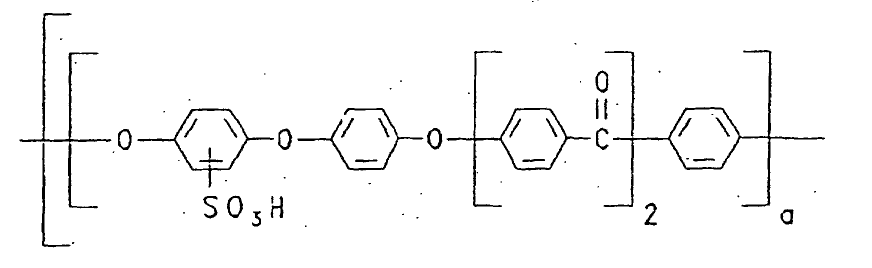 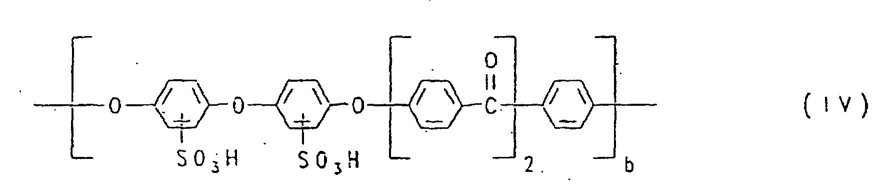 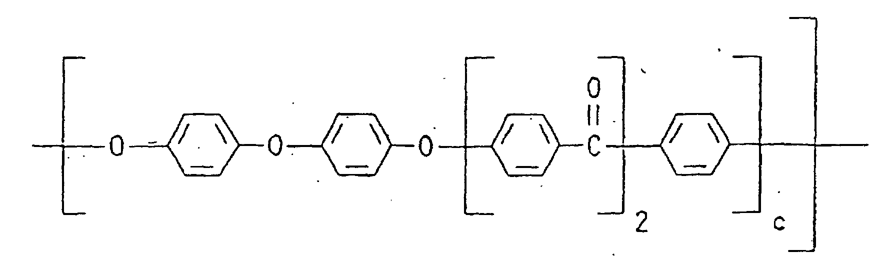 in der a eine Zahl von 0,1 bis 1, b eine Zahl von 0 bis 1 und c eine Zahl von 0 bis 0,5 bedeutet und die Summe a + b + c = 1 beträgt.

4. Polymerlegierung nach Anspruch 3, **dadurch gekennzeichnet, daß** das sulfonierte, aromatische Polyetherketon ein sulfoniertes Copolymer ist, das aus mindestens zwei unterschiedlichen Wiederholeinheiten der allgemeinen Formel II, III und IV aufgebaut ist.

5. Polymerlegierung nach Anspruch 1, **dadurch gekennzeichnet, daß** die sulfonierten, aromatischen Polyetherketone eine Molmasse besitzen, deren Gewichtsmittel im Bereich von 10 000 bis 150 000 g/mol liegt.

6. Polymerlegierung nach den Ansprüchen 1 oder 2, **dadurch gekennzeichnet, daß** sie mindestens ein aromatisches Polysulfon enthält, das Struktureinheiten der allgemeinen Formel V
-X-Ar¹-(-Z-Ar²-)ₙ-(X-Ar³)ₘ-SO₂-Ar¹- (V)
aufweist, wobei
-Ar¹- einen 1,4-Phenylenrest oder einen zweiwertigen Rest eines Heteroaromaten oder eines C,O-C14-Aromaten, der gegebenenfalls Sulfonsäuregruppen oder Etherbrücken enthält und gegebenenfalls mit einem oder zwei verzweigten oder unverzweigten C₁-C₄-Alkyl oder Alkoxyresten oder mit einem oder mehreren Halogenatomen substituiert ist,
-Ar²- und -Ar³- gleiche oder verschiedene 1,2-Phenylen-, 1,3-Phenylen-, 1,4-Phenylen- oder 4,4'-Biphenylreste, die gegebenenfalls mit einem oder zwei verzweigten oder unverzweigten C₁-C₄-Alkyl- oder Alkoxyresten oder mit einem oder mehreren Halogenatomen, substituiert sind,
-Z- eine direkte Bindung oder einen der folgenden zweiwertigen Reste -O-, -S-, - C(CH₃)₂-, -C(CF₃)₂-, -SO₂- oder - X-Ar³-X-,
X O, S, SO, CO oder SO₂
n eine ganze Zahl, insbesondere 0, 1 oder 2 und
m eine ganze Zahl, insbesondere 0, 1 oder 2
bedeuten.

7. Polymerlegierung nach Anspruch 1 oder 2, **dadurch gekennzeichnet, daß** sie mindestens ein aromatisches Polysulfon der Formel A, B, C oder D enthält,
(A) -O-Ar⁴-SO₂-Ar⁴
(B) -O-Ar⁴-O-Ar⁴ -SO₂-Ar⁴
(C) -O-Ar⁴-C(CH₃)₂-Ar⁴-O-Ar⁴-SO₂-Ar⁴-,
(D) -O-Ar⁴-Ar⁴-O-Ar⁴-SO₂-Ar⁴
wobei die einzelnen Gruppen Ar⁴ unabhängig voneinander einen Phenylenrest oder einen zweiwertigen Rest eines Heteroaromaten oder eines C₁₀-C₁₄-Aromaten bedeuten, der gegebenenfalls Sulfonsäuregruppen oder Etherbrücken enthält und gegebenenfalls mit einem oder zwei C₁-C₄-Alkyl- oder C₁-C₄-Alkoxyresten oder ein oder mehreren Halogenatome substituiert ist.

8. Polymerlegierung nach Anspruch 1, **dadurch gekennzeichnet, daß** sie ein Polyvinylpyrrolidon enthält, dessen Molekulargewicht, angegeben als Gewichtsmittel, im Bereich von 1000 bis 3 Millionen, vorzugsweise im Bereich von 20 000 bis 200 000, insbesondere im Bereich von 40 000 bis 100 000, liegt.

9. Polymerlegierung nach Anspruch 1, **dadurch gekennzeichnet, daß** sie einen Polyglykoldialkylether oder Polyglykoldialkylester mit einem Molekulargewicht enthält, dessen Gewichtsmittel im Bereich von 100 bis 100 000, vorzugsweise im Bereich von 250 bis 80 000, insbesondere im Bereich von 500 bis 50 000, liegt.

10. Verfahren zur Herstellung einer homogenen Polymerlegierung nach Anspruch 1, **dadurch gekennzeichnet, daß** man eine Lösung bereitet, die das sulfonierte aromatische Polyetherketon, das aromatische Polysulfon und die restlichen Polymerbestandteile in einem aprotischen organischen Lösemittel enthält und dann das Lösemittel entfernt.

11. Verfahren nach Anspruch 10, **dadurch gekennzeichnet, daß** man das aromatische Polysulfon in einem aprotischen, organischen Lösemittel durch Polykondensation herstellt und die Lösung des Polysulfon mit einer Lösung vereinigt, die das sulfonierte, aromatische Polyetherketon sowie gegebenenfalls weitere Polymerbestandteile im gleichen Lösemittel enthält, und dann das Lösemittel entfernt.

12. Verwendung der Polymerlegierung gemäß Anspruch 1, für die Herstellung von Formkörpern, Folien, symmetrischen und asymmetrischen Membranen, Beschichtungen oder Fasern sowie als Kationenaustauschermembran.

## Claims

1. Homogeneous polymer blend, comprising at least one sulfonated, aromatic polyether ketone and at least one polysulfone, **characterised in that** the polysulfone is an aromatic polysulfone, the ratio by weight of sulfonated polyether ketone/polysulfone is from 1:99 to 99:1 and the blend contains from 5 to 30 % by weight of at least one hydrophilic polymer selected from the group of polyvinylpyrrolidone, polyglycol dialkyl ether, polyglycol dialkyl ester and poly-[1-(2-oxo-1-pyrrolidinyl)ethylene-co-1-(acetyloxy)ethylene].

2. Homogeneous polymer blend according to claim 1, **characterised in that** it comprises at least one sulfonated, aromatic polyether ketone having the general formula I 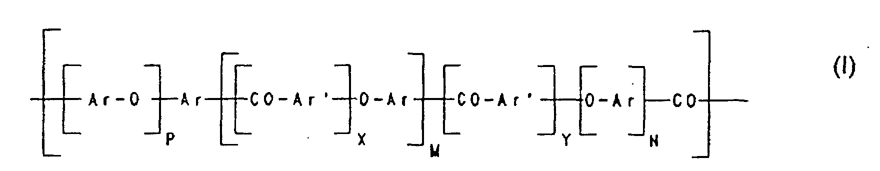 wherein
Ar is a phenylene ring having para- and/or meta-bonds,
Ar'- is a phenylene, naphthylene, biphenylene, anthrylene or another divalent aromatic unit,
X, N and M are each independently of the others zero or 1,
Y is zero, 1, 2 or 3,
p is 1, 2, 3 or 4,
and wherein in the general formula I at least 20 % and at most 100 % of the O-Ar-O units are substituted by a SO₃H group.

3. Polymer blend according to claim 1 or 2, **characterised in that** it comprises at least one sulfonated, aromatic polyether ketone of the general formula II 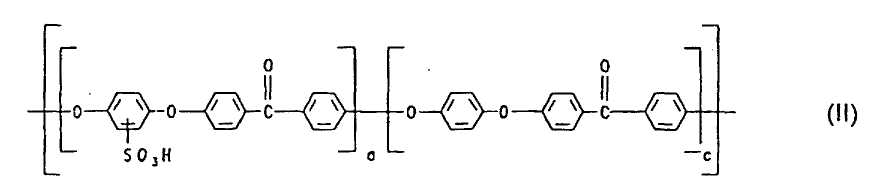 wherein a is a number from 0.2 to 1 and c is a number from 0 to 0.8 and the sum a + c = 1, or of the general formula III 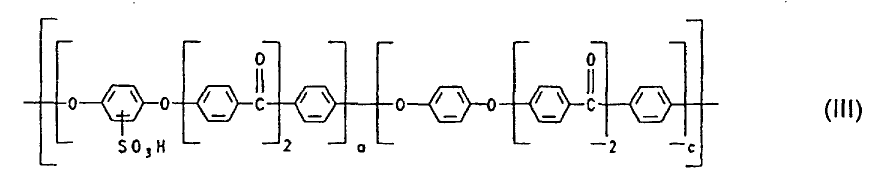 wherein a is a number from 0.2 to 1 and c is a number from 0 to 0.8 and the sum a + c = 1, or of the general formula lV 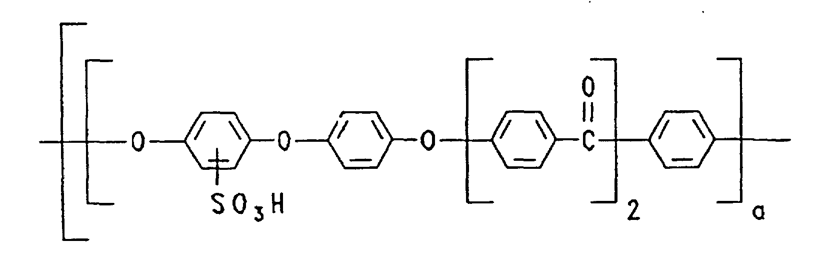 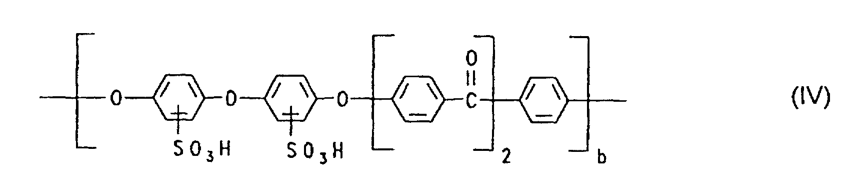 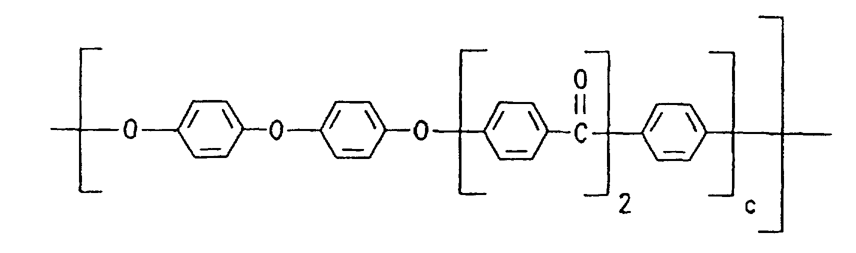 in which a is a number from 0.1 to 1, b is a number from 0 to 1 and c is a number from 0 to 0.5 and the sum a + b + c = 1.

4. Polymer blend according to claim 3, **characterised in that** the sulfonated, aromatic polyether ketone is a sulfonated copolymer which is composed of at least two different repeating units of the general formulae II, III and IV.

5. Polymer blend according to claim 1, **characterised in that** the sulfonated, aromatic polyether ketones have a weight average molecular weight in the range of from 10,000 to 150,000 g/mol.

6. Polymer blend according to claim 1 or 2, **characterised in that** it comprises at least one aromatic polysulfone having structural units of the general formula V
-X-Ar¹-(-Z-Ar²-)ₙ-(X-Ar³)ₘ-SO₂-Ar¹- (V)
wherein
- Ar¹- is a 1,4-phenylene radical or a divalent radical of a heteroaromatic compound or of a C₁₀-C₁₄-aromatic compound which optionally contains sulfonic acid groups or ether bridges and is optionally substituted by one or two branched or unbranched C₁-C₄-alkyl or alkoxy radicals or by one or more halogen atoms,
-Ar²- and -Ar³- are identical or different 1,2-phenylene, 1,3-phenylene, 1,4-phenylene or 4,4'-biphenyl radicals which are optionally substituted by one or two branched or unbranched C₁-C₄-alkyl or alkoxy radicals or by one or more halogen atoms,
- Z- is a direct bond or one of the following divalent radicals -O-, -S-, - C(GH₃)₂-, -C(CF₃)₂-, -SO₂- or-X-Ar³-X,
X is O, S, SO, CO or SO₂,
n is a whole number, especially 0, 1 or 2, and
m is a whole number, especially 0, 1 or 2.

7. Polymer blend according to claim 1 or 2, **characterised in that** it comprises at least one aromatic polysulfone of the formula A, B, C or D
(A) -O-Ar⁴-SO₂-Ar⁴
(B) -O-Ar⁴-O-Ar⁴-SO₂-Ar⁴
(C) -O-Ar⁴-C(CH₃)₂-Ar⁴-O-Ar⁴-SO₂-Ar⁴-
(D) -O-Ar⁴-Ar⁴-O-Ar⁴-SO₂-Ar⁴
wherein the individual groups Ar⁴ are each independently of the other(s) a phenylene radical or a divalent radical of a heteroaromatic compound or of a C₁₀-C₁₄-aromatic compound which optionally contains sulfonic acid groups or ether bridges and is optionally substituted by one or two C₁-C₄-alkyl or C₁-C₄-alkoxy radicals or by one or more halogen atoms.

8. Polymer blend according to claim 1, **characterised in that** it comprises a polyvinylpyrrolidone, the weight average molecular weight of which is in the range of from 1000 to 3 million, preferably in the range of from 20,000 to 200,000, especially in the range of from 40,000 to 100,000.

9. Polymer blend according to claim 1, **characterised in that** it comprises a polyglycol dialkyl ether or polyglycol dialkyl ester having a weight average molecular weight in the range of from 100 to 100,000, preferably in the range of from 250 to 80,000, especially in the range of from 500 to 50,000.

10. Process for the preparation of a homogeneous polymer blend according to claim 1, **characterised in that** a solution is prepared which contains the sulfonated aromatic polyether ketone, the aromatic polysulfone and the remaining polymer constituents in an aprotic organic solvent and then the solvent is removed.

11. Process according to claim 10, **characterised in that** the aromatic polysulfone is prepared by polycondensation in an aprotic, organic solvent and the solution of the polysulfone is combined with a solution containing the sulfonated, aromatic polyether ketone and optionally further polymer constituents in the same solvent, and then the solvent is removed.

12. Use of the polymer blend according to claim 1 for the preparation of moulded articles, films, symmetric and asymmetric membranes, coatings or fibres and as a cation exchange membrane.

## Revendications

1. Alliage polymère homogène contenant au moins une polyéthercétone aromatique sulfonée et au moins une polysulfone, **caractérisé en ce que** la polysulfone est une polysulfone aromatique, le rapport pondéral polyéthercétone sulfonée/polysulfone est 1 : 99 à 99 : 1 et l'alliage contient 5 à 30 % en poids d'au moins un polymère hydrophile qui est choisi dans le groupe de la polyvinylpyrrolidone, des polyglycoldialkyléthers, des polyglycoldialkylesters et du poly-[1-(2-oxo-1-pyrrolidinyl)éthylène-co-1-(acétyloxy)éthylène].

2. Alliage polymère homogène selon la revendication 1 **caractérisé en ce qu'**il contient au moins une polyéthercétone aromatique sulfonée de formule générale 1 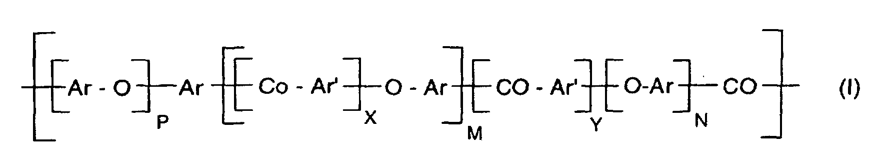 où
Ar représente un cycle phénylène à liaisons para- et/ou méta,
Ar' représente une unité phénylène, naphtylène, biphénylène, anthrylène ou une autre unité aromatique divalente,
X, N et M représentent indépendamment les uns des autres 0 ou 1,
Y représente 0, 1, 2 ou 3,
p représente 1, 2, 3 ou 4,
et où, dans la formule générale I, au moins 20 % et au plus 100 % des unités O-Ar-O- sont substituées avec un groupe SO₃H.

3. Alliage polymère selon la revendication 1 ou 2 **caractérisé en ce qu'**il contient au moins une polyéthercétone aromatique sulfonée de formule générale II 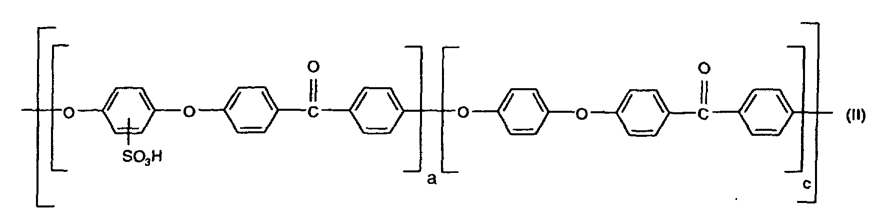 où a représente un nombre de 0,2 à 1 et c un nombre de 0 à 0,8 et la somme a + c = 1, ou dé formule générale III 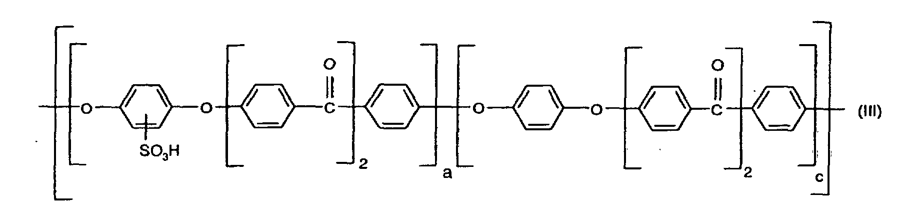 où a représente un nombre de 0,2 à 1 et c un nombre de 0 à 0,8 et la somme a + c = 1, ou de formule générale IV 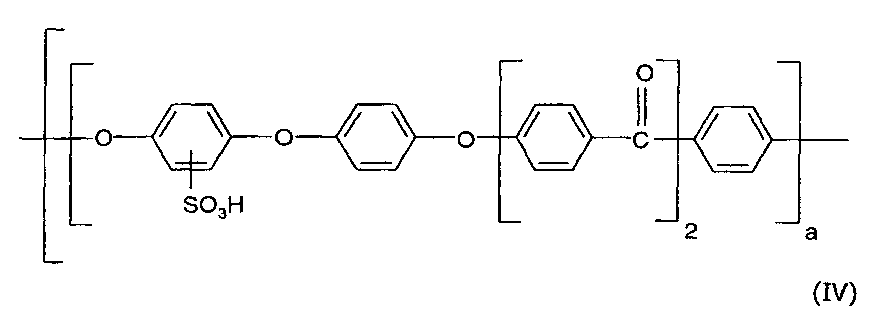 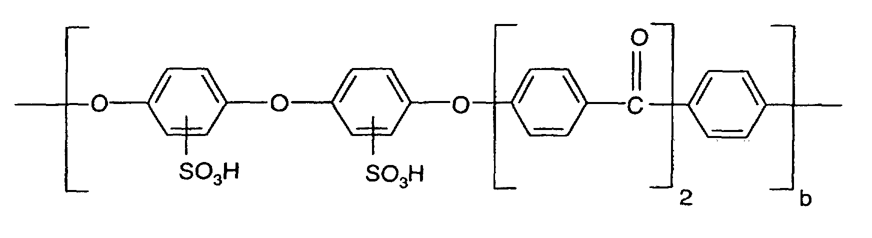 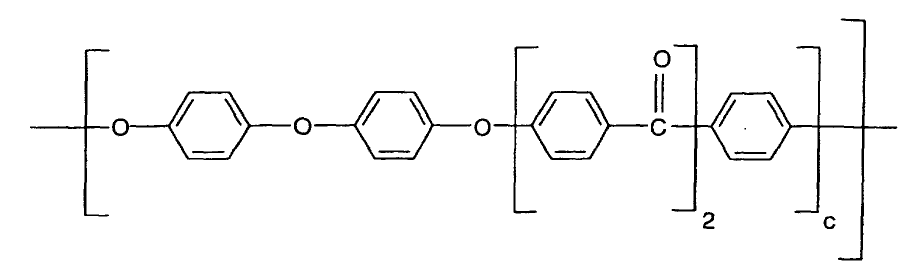 où a représente un nombre de 0,1 à 1, b un nombre de 0 à 1 et c un nombre de 0 à 0,5 et la somme a + b + c = 1.

4. Alliage polymère selon la revendication 3 **caractérisé en ce que** la polyéthercétone aromatique sulfonée est un copolymère sulfoné qui est formé à partir d'au moins deux unités répétées des formules générales II, III et IV différentes.

5. Alliage polymère selon la revendication 1 **caractérisé en ce que** les polyéthercétones aromatiques sulfonées possèdent une masse molaire dont la moyenne en poids est située dans le domaine de 10 000 à 150 000 g/mol.

6. Alliage polymère selon les revendications 1 ou 2 **caractérisé en ce qu'**il contient au moins une polysulfone aromatique qui comporte des unités structurales de formule générale V
-X-Ar¹-(-Z-Ar²-)ₙ (X-Ar³)ₘ-SO₂-Ar¹- (V)
où
- Ar¹- représente un reste 1,4-phénylène ou un reste divalent d'un composé hétéroaromatique ou d'un composé C,O-C14-aromatique, qui contient éventuellement des groupes acide sulfonique ou des ponts éthers et qui est éventuellement substitué avec un ou deux restes C₁-C₄-alkyle ou alcoxy ramifiés ou non ramifiés ou avec un ou plusieurs atomes d'halogène,
-Ar²- et -Ar³- représentent des restes 1,2-phénylène, 1,3-phénylène, 1,4-phénylène ou 4,4'-biphényle identiques ou différents qui sont éventuellement substitués avec un ou deux restes C₁-C₄-alkyle ou alcoxy ramifiés ou non ramifiés ou avec un ou plusieurs atomes d'halogène,
- Z- représente une liaison directe ou l'un des restes divalents suivants - O-, -S-, -C(CH₃)₂-, -C(CF₃)₂-, -SO₂- ou -X-Ar³-X
X représente O, S, SO, CO ou SO₂,
n représente un nombre entier, en particulier 0, 1 ou 2 et
m représente un nombre entier, en particulier 0, 1 ou 2.

7. Alliage polymère selon la revendication 1 ou 2 **caractérisé en ce qu'**il contient au moins une polysulfone aromatique de formule A, B, C ou D,
(A) -O-Ar⁴-SO₂-Ar⁴
(B) -O-Ar⁴-O-Ar⁴-SO₂-Ar⁴
(C) -O-Ar⁴-C(CH₃)₂-Ar⁴-O-Ar⁴-SO₂-Ar⁴-,
(D) -O-Ar⁴-Ar⁴-O-Ar⁴-SO₂-Ar⁴
où les différents groupes Ar⁴ représentent indépendamment les uns des autres un reste phénylène ou un reste divalent d'un composé hétéroaromatique ou d'un composé C₁₀-C₁₄-aromatique, qui contient éventuellement des groupes acide sulfonique ou des ponts éthers et qui est éventuellement substitué avec un ou deux restes C₁-C₄-alkyle ou C₁-C₄-alcoxy ou un ou plusieurs atomes d'halogène.

8. Alliage polymère selon la revendication 1 **caractérisé en ce qu'**il contient une polyvinylpyrrolidone dont la masse moléculaire, indiquée en moyenne en poids, est située dans le domaine de 1 000 à 3 millions, de préférence dans le domaine de 20 000 à 200 000, en particulier dans le domaine de 40 000 à 100 000.

9. Alliage polymère selon la revendication 1 **caractérisé en ce qu'**il contient un polyglycoldialkyléther ou un polyglycoldialkylester ayant une masse moléculaire dont la moyenne en poids est située dans le domaine de 100 à 100 000, de préférence dans le domaine de 250 à 80 000, en particulier dans le domaine de 500 à 50 000.

10. Procédé pour préparer un alliage polymère homogène selon la revendication 1 **caractérisé en ce que** l'on prépare une solution qui contient la polyéthercétone aromatique sulfonée, la polysulfone aromatique et les autres constituants de polymère dans un solvant organique aprotique puis on élimine le solvant.

11. Procédé selon la revendication 10 **caractérisé en ce que** l'on prépare la polysulfone aromatique dans un solvant organique aprotique par polycondensation et on combine la solution de la polysulfone avec une solution qui contient la polyéthercétone aromatique sulfonée ainsi éventuellement que d'autres constituants de polymère dans le même solvant, puis on élimine le solvant.

12. Utilisation de l'alliage polymère selon la revendication 1 pour la production de corps mis en forme, de feuilles, de membranes symétriques et asymétriques, de revêtements ou de fibres, ainsi que comme membrane échangeuse de cations.
